# EUROPÄISCHE PATENTANMELDUNG

(11) **EP 2 908 054 A1**
(43) Veröffentlichungstag der Anmeldung: **19.08.2015**
(21) Anmeldenummer: 15155088.6
(22) Anmeldetag: 13.02.2015
(51) Int. Cl.: F23L 7/00, F23C 6/04, F23D 14/66

(54) **Verfahren und Vorrichtung zur in-situ Nachverbrennung von bei einem Verbrennungsvorgang erzeugten Schadstoffen**

(30) Priorität: 14.02.2014 DE 102014002074
(71) Anmelder: Messer Austria GmbH, 2352 Gumpoldskirchen (AT)
(72) Erfinder: Demuth, Martin, 2352 Gumpoldskirchen (AT)
(74) Vertreter: Münzel, Joachim R.

(57) **Zusammenfassung**

Bei der Verbrennung fester oder flüssiger Brennstoffe oder im Verlauf bestimmter thermischer Behandlungsvorgänge erfolgt die Verbrennung häufig nur unvollständig und es kommt zu hohen Konzentrationen von Kohlenmonoxid und Kohlenwasserstoffen im Abgas. Zu deren Beseitigung müssen nach dem Stande der Technik aufwändige Verbrennungseinrichtungen zur Nachverbrennung vorgesehen werden.

Zur Verringerung des Kohlenmonoxidgehalts im Ofenabgas wird erfindungsgemäß vorgeschlagen, dem Ofenraum mit einer Sauerstofflanze heißen Sauerstoff zuzuführen. Die Beheizung des Sauerstoffs erfolgt mittels eines zusätzlichen Brenners der bevorzugt in der Sauerstofflanze integriert ist. Durch die starke Wärmeentwicklung und den Verbrennungsprozess wird die Bildung von Radikalen im Sauerstoffstrom begünstigt, die wiederum für eine effiziente Nachverbrennung von CO und Kohlenwasserstoffanteilen im Abgas sorgen.

## Beschreibung

Die Erfindung betrifft ein Verfahren zur in-situ Nachverbrennung von bei einem Verbrennungsvorgang erzeugten Schadstoffen, bei dem an einem dem Ofenraum zugeordneten Hauptbrenner ein erster Brennstoff mit einem ersten Oxidationsmittel verbrannt wird und bei dem zur in-situ Nachverbrennung von Schadstoffen zusätzlich Radikale im Ofenraum erzeugt werden. Die Erfindung betrifft des Weiteren eine entsprechende Vorrichtung.

Der Prozess der Verbrennung von flüssigen oder festen Brennstoffen erfolgt in mehreren Stufen, bei denen die Brennstoffpartikel zunächst getrocknet, anschließend pyrolysiert und schließlich verbrannt werden. In vielen Fällen erfolgt dabei keine vollständige Verbrennung der eingesetzten Brennstoffpartikel. In Abhängigkeit von Qualität und Zusammensetzung des jeweiligen Brennstoffs können insbesondere während der Pyrolyse Kohlenwasserstoffe (CₓH_{y}) entstehen, die im weiteren Reaktionsverlauf nicht vollständig zersetzt werden, sondern ins Abgas gelangen. In ähnlicher Weise können Kohlenwasserstoffe und anderer Schadstoffe, die als Reaktionsprodukte einer thermischen Behandlung eines Rohmaterials entstehen, nicht immer bereits im Ofenraum des Behandlungsofens vollständig umgesetzt werden. Um die gesetzlich vorgeschriebenen Abgasgrenzwerte einhalten zu können, wird das Abgas daher in aufwändigen Verfahren einer Nachverbrennung unterzogen, für die erhebliche Investitions- wie Betriebskosten aufgewendet werden müssen.

Beispielsweise ist aus der DE 10 2009 055 942 A1 bekannt, zur Verminderung des Schadstoffausstoßes, insbesondere zur Verminderung des Gehalts von CO und NOₓ im Abgas, eine regenerative thermische Nachverbrennungsanlage einzusetzen, in der in einer mehrstufigen Brennkammer bei einer Temperatur von mehr als 850°C Kohlenmonoxid und andere Kohlenstoffverbindungen oxidiert werden. Neben der Oxidation der Kohlenstoffverbindungen wird zudem unter Zuführung einer Stickstoff-Wasserstoff-Verbindung eine simultane Reduktion der Stickoxide durchgeführt. Dieser Lösungsvorschlag ist zwar effektiv, jedoch mit außerordentlich hohen apparativen Kosten verknüpft. Daneben kann der Gehalt an Kohlenmonoxid im Abgas auch dadurch verringert werden, dass überstöchiometrischer Sauerstoff mittels einer Sauerstofflanze in den Verbrennungsraum eingebracht wird. Hierzu ist jedoch eine vergleichsweise hohe Temperatur im Ofenraum von beispielsweise 800°C oder mehr erforderlich.

Bei thermischen Behandlungsprozessen, die bei vergleichsweise niedrigen Temperaturen im Verbrennungsraum von unter 750°C stattfinden, versagt diese Methode jedoch. Ein Beispiel hierfür ist die Herstellung von Blähton (auch bekannt als LECA-Kugeln oder Pflanzengranulat). Beim Blähton handelt es sich um ein Material, bei dem ein Tonrohmaterial mit einem meist organischen Blähmittel versetzt wird. In einem ersten Prozessschritt, der sogenannten Vorwärmung, der meist in einem Schachtofen oder Drehrohrofen erfolgt, wird das Material auf eine Temperatur von 300°C bis 550°C beheizt, wobei es zunächst trocknet und anschließend pyrolysiert. Anschließend wird das Material in einem zweiten Drehrohrofen bei einer Temperatur von ca. 1250°C gebrannt. Bereits während der Vorwärmphase zerfällt das Blähmittel in verschiedene Kohlenwasserstoffe, wie beispielsweise Ethyl-, Ethylen- oder Methyl-Gruppen. Diese Kohlenwasserstoffe werden allerdings häufig im weiteren Verlauf des Prozesses nur teilweise unter Bildung von Kohlendioxid und Wasser weiterverbrannt und gelangen zu einem nicht geringen Anteil in das Abgas, wobei sie teilweise zu Benzol rekombinieren. Darüberhinaus enthält das Abgas häufig noch weitere Schadstoffe, insbesondere Kohlenmonoxid und/oder geruchsbelästigende Schadstoffe, wie beispielsweise Schwefelwasserstoffe.

Die Ursache für die insoweit unzureichende Verbrennung liegt unter anderem an einem Mangel an Radikalen im Ofenraum. Um in der Vorwärmstufe das Material auf die angegebene Temperatur zu bringen, wird die Ofenatmosphäre mittels eines Brenners auf eine Temperatur von ca. 500 bis 750°C gebracht. Diese Temperatur reicht jedoch nicht aus, um die für die vollständige Verbrennung der Schadstoffe erforderlichen Radikale in hinreichender Menge zu bilden. Die Zufuhr von Sauerstoff zur Nachverbrennung über eine Sauerstofflanze würde hier nicht das gewünschte Ergebnis bringen, da der Zustrom des Sauerstoffs die Ofenatmosphäre im Umgebungsbereich der Eintragslanze abkühlen und dabei die Bildung von Radikalen weiter erschweren würde.

In der EP 2 551 599 A2 wird ein Verfahren zur Reduktion von CO- Emissionen in einer mit Kohlenwasserstoff und Sauerstoff betriebenen Gasturbine beschrieben, bei dem in Abhängigkeit von der im Abgas gemessenen Kohlenmonoxid-Konzentration über verschiedene Eintragsysteme Wasserstoff, ein zusätzliches Oxidationsmittel sowie ein Moderationsgas in die Verbrennungskammer eingebracht wird. Die Zuführung des Wasserstoffs führt zu einer verstärkten Bildung von OH-Radikalen im Verbrennungsraum, die wiederum die vollständige Verbrennung von Kohlenmonoxid zu Kohlendioxid begünstigen, während das Moderationsgas zur Kontrolle der Abgastemperatur dient. Eine solche Anordnung ist allerdings sehr aufwändig im Aufbau und erfordert zudem die Bereitstellung von Wasserstoff und Moderationsgas als zusätzliche Betriebsmittel.

Aufgabe der vorliegenden Erfindung ist daher, den Ausstoß an Kohlenmonoxid am und Kohlenwasserstoffen im Abgas von Verbrennungsprozessen und/oder thermischen Behandlungen mit einem vergleichsweise geringen apparativen Aufwand zu verringern.

Gelöst ist diese Aufgabe durch ein Verfahren mit den Merkmalen des Anspruchs 1 sowie durch eine Vorrichtung mit den Merkmalen des Anspruchs 6. Vorteilhafte Ausgestaltungen der Erfindung sind in den Unteransprüchen angegeben.

Gemäß dem erfindungsgemäßen Verfahren wird also dem Ofenraum mittels einer Sauerstofflanze überstöchiometrischer Sauerstoff zugeführt, der seinerseits durch Verbrennen eines zweiten Brennstoffs an einem zweiten im Ofenraum installierten Brenner beheizt wird. Durch die Zuführung des solcherart erhitzten Sauerstoffs werden Kohlenwasserstoffe, Kohlenmonoxid und andere Schadstoffe, die beim Verbrennen des ersten Brennstoffs und/oder als Reaktionsprodukt einer thermischen Behandlung eines Rohmaterials in der Ofenatmosphäre anfallen und in der Flamme des ersten Brenners nicht verbrannt werden, wirkungsvoll nachverbrannt.

Als "Sauerstoff" soll hier ein Gas mit einem Sauerstoffanteil von über 40 Vol.-%, bevorzugt über 95 Vol.-%, besonders bevorzugt über 99 Vol.-% bezeichnet werden. Der zweite Brennstoff wird bevorzugt mit Sauerstoff (entsprechend dieser Definition) als Oxidationsmittel verbrannt, bevorzugt mit einem Teil des über die Sauerstofflanze eingetragenen Sauerstoffs selbst. Dazu ist der zweite Brenner entweder als separater Brennstoff-Sauerstoff-Brenner konzipiert, oder es handelt sich im Wesentlichen um eine Brennstoffzuführung, die innerhalb der Sauerstofflanze angeordnet ist. Im letztgenannten Fall wird der zweite Brennstoff mit einem kleinen Teil des Sauerstoffs verbrannt, der über die Sauerstofflanze zugeführt wird; der weitaus größere Teil des über die Sauerstofflanze zugeführten Sauerstoffs wird jedoch als solcher in den Ofenraum eingetragen und lediglich durch die Verbrennung des zweiten Brennstoffs erhitzt. Bevorzugt sollte mindestens 50%, besonders bevorzugt mindestens 80% des Sauerstoffs als solcher in den Ofenraum eingetragen werden.

Die Zufuhr des erhitzten Sauerstoffs hat gleich mehrere Vorteile: Zum einen wird eine Reaktionszone mit einer großen Dichte von Radikalen geschaffen, wodurch die Verbrennung der Schadstoffe besonders gefördert wird. Es hat sich gezeigt, dass eine Flamme, bei der ein Brennstoff mit Sauerstoff verbrannt wird, um einen Faktor 10 mehr Radikale erzeugt, als dies bei einer Verbrennung des gleichen Brennstoffs mit Luft der Fall ist. Zudem enthalten die Brenngase des üblicherweise mit einem Kohlenwasserstoff oder Wasserstoff als Brennstoff betriebenen zweiten Brenners in hohem Maße H- und OH-Radikale, die insbesondere für die Nachverbrennung von Kohlenmonoxid wesentlich sind. Des Weiteren besitzt der aufgeheizte Sauerstoff eine vergleichbare Viskosität wie die umgebende Ofenatmosphäre und kann sich daher gut mit dieser vermischen. Darüber hinaus erfolgt keine Kühlung des hochreaktiven Nahbereichs der den Sauerstoff eintragenden Lanze durch kalten Sauerstoff mehr, was insbesondere auch energetische Vorteile mit sich bringt.

Als zweiter Brennstoff kommt bevorzugt ein gasförmiger Brennstoff zum Einsatz, wie beispielsweise Erdgas, Methan, Flüssiggas wie Propan oder Butan, Wasserstoff oder Mischungen dieser Stoffe. Die Verwendung dieser Brennstoffe als zweitem Brennstoff gewährleistet eine rasche und zumindest weitgehend vollständige Verbrennung unter Bildung einer hohen Menge an Radikalen, insbesondere H- und OH-Radikale.

Bevorzugt beträgt das Volumenstromverhältnis aus dem dem Ofenraum über die Sauerstofflanze zugeführten Sauerstoff und dem dem zweiten Brenner zugeführten zweiten Brennstoff mindestens 10:1, bevorzugt mindestens 20:1. Mit einem solchen, extrem überstöchiometrischen Volumenstromverhältnis wird gewährleistet, dass nur ein kleiner Teil des eingeleiteten Sauerstoffs mit dem Brennstoff verbrannt und zur Aufheizung des übrigen Sauerstoffs verwandt wird.

Zweckmäßigerweise kommt das erfindungsgemäße Verfahren bei Prozessen zum Einsatz, bei denen in der Atmosphäre des Ofenraums infolge der Verbrennung des ersten Brennstoffs mit dem ersten Oxidationsmittel eine Temperatur von 600°C bis 750°C herrscht. Bei Verbrennungsprozessen, die bei derartigen, vergleichsweise niedrigen Temperaturen ablaufen, kommt es in vielen Fällen nur in einem ungenügenden Maß zur Bildung von Radikalen, die wiederum für die vollständige Verbrennung von schädlichen CₓH_{y} - Bestandteilen und Kohlenmonoxid erforderlich sind. Durch die Zuführung des erhitzten Sauerstoffs nach dem erfindungsgemäßen Verfahren entsteht im Umfeld des Sauerstoffeintrags eine an Radikalen reiche Atmosphäre, die die Verbrennung dieser Schadstoffe fördert.

Eine vorteilhafte Weiterbildung der Erfindung sieht vor, dass der über die Sauerstofflanze zugeführte Sauerstoffstrom auf eine Temperatur aufgeheizt wird, die gleich oder höher ist also die Temperatur der Atmosphäre im Ofenraum oder, wenn der Sauerstoffstrom auf einen aus dem Ofenraum tretenden Abgasstrom gerichtet ist, gleich oder höher als die Temperatur des aus dem Ofenraum entweichenden Abgases. Bevorzugt erfolgt dabei eine Aufheizung auf eine Temperatur zwischen 800°C und 1200°C, besonders bevorzugt auf etwa 1000°C.

Die Aufgabe der Erfindung wird auch durch eine Vorrichtung mit den Merkmalen des Anspruchs 6 gelöst. Eine Vorrichtung zur in-situ Nachverbrennung von Schadstoffen in einem Ofenraum, der einen mit einer Zuleitung für einen, flüssigen oder festen, ersten Brennstoff und einer Zuleitung für ein erstes Oxidationsmittel ausgerüsteten Hauptbrenner sowie Mittel zur zusätzlichen Erzeugung von Radikalen im Ofenraum aufweist, ist demnach erfindungsgemäß dadurch gekennzeichnet, dass die Mittel zur zusätzlichen Erzeugung von Radikalen eine mit einer Quelle für Sauerstoff strömungsverbundene Sauerstofflanze und einen mit einer Brennstoffzuleitung zur Zuführung eines zweiten Brennstoffs ausgerüsteten zweiten Brenner zur Aufheizung des über die Sauerstofflanze zugeführten Sauerstoffstroms umfassen. Bei der erfindungsgemäßen Vorrichtung werden also zusätzlich zu den Radikalen, die bei der Verbrennung des ersten Brennstoffs am Hauptbrenner erzeugt werden, mittels der Sauerstofflanze und dem zweiten Brenner in großem Umfang weitere Radikale, insbesondere OH- und H- Radikale erzeugt, die die in-situ Nachverbrennung von Schadstoffen noch im Ofenraum begünstigen. Beim Ofenraum handelt es sich beispielsweise um den Verbrennungsraum eines Drehrohrofens; im Rahmen der Erfindung jedoch jede Einrichtung zur Wärmeerzeugung zum Einsatz kommen, in der das erfindungsgemäße Verfahren durchgeführt werden kann, beispielsweise ein Schachtofen, ein Kammerofen oder ein Reaktor.

Bevorzugt ist dabei der zweite Brenner mit einem Brennstoffkanal ausgerüstet, der innerhalb der Sauerstofflanze angeordnet ist. Insbesondere erübrigt sich bei dieser Anordnung das Vorsehen einer eigenen Sauerstoffzuleitung für den Brenner. Der aus dem Brennstoffkanal ausgetragene Brennstoff wird mit einem Teil des Sauerstoffstroms aus der Sauerstofflanze verbrannt. Der Brennstoffkanal ist beispielsweise koaxial in der Sauerstofflanze aufgenommen und mündet bündig mit der Sauerstofflanze in den Ofenraum ein. Mit diesem Aufbau ähnelt die erfindungsgemäß mit dem Brenner ausgerüstete Sauerstofflanze einer üblichen Brenneranordnung vom "Impulsbrenner"-Typ. Jedoch wird die Brenner-Lanzenkombination erfindungsgemäß mit einem starken Sauerstoffüberschuss betrieben und ist entsprechend baulich so gestaltet, dass im Betrieb der Brenner-Lanzen-Kombination, bei jeweils vorgegebenen Ausströmgeschwindigkeiten der beiden Medien, der Volumenstrom des Brennstoffs etwa um einen Faktor 10 bis 25 kleiner als der Volumenstrom des Sauerstoffs ist. Beispielsweise besitzt in dem Fall, dass die Ausströmgeschwindigkeiten beider Medien im Wesentlichen gleich sein sollen, die Sauerstofflanze einen um einen Faktor 10 bis 20 größeren freien Querschnitt als der Brennstoffkanal.

Alternativ zur vorgenannten Anordnung umfasst der zweite Brenner eine Vorverbrennungskammer mit angeschlossener Verteilungs- und/oder Dralleinrichtung. In dieser Ausführungsform beginnt der Verbrennungsprozess also bereits innerhalb des zweiten Brenners, indem Sauerstoff und Brennstoff in die Vorverbrennungskammer eingetragen und gezündet werden. Die heißen Brenngase werden anschließend in den Ofenraum ausgetragen und vermischen sich mit dem nicht verbrannten Teil des Sauerstoffstroms, wobei die Verteilungs- und/oder Dralleinrichtung für eine möglichst breite Verteilung der Brenngase sorgt.

Um die unterschiedlichen Volumenströme von zweitem Brennstoff und Sauerstoff zu realisieren, sieht eine bevorzugte Ausführungsform der Erfindung vor, dass die Querschnittsflächen von Sauerstofflanze und Brennstoffkanal des zweiten Brenners ein Verhältnis von mindestens 10:1, bevorzugt mindestens 20:1 aufweisen. Im Falle, dass der Brennstoffkanal innerhalb der Sauerstofflanze angeordnet ist, bezieht sich dieses Verhältnis auf den freien Querschnitt der Sauerstofflanze, also die nicht vom Brennstoffkanal eingenommene Querschnittsfläche.

Eine vorteilhafte Weiterbildung der Erfindung ist dadurch gekennzeichnet, dass die Sauerstofflanze in einen aus dem Ofenraum entweichenden Abgasstrom gerichtet ist. Dadurch wird der Abgasstrom unmittelbar mit dem an Radikalen reichen, erhitzten Sauerstoffstrom beaufschlagt und es findet eine besonders effiziente Nachverbrennung von im Abgas enthaltenen Schadstoffen statt, die aus der Verbrennung des ersten Brennstoffs oder der thermischen Behandlung eines Rohmaterials stammen.

Zweckmäßigerweise sind die Volumenströme von Sauerstofflanze und/oder zweitem Brenner mittels Stellventilen variierbar ausgebildet, wobei die Stellventile mit einer Steuereinheit sowie mit Sensoren zur Temperaturüberwachung im zweiten Brenner und/oder zur Überwachung des Schadstoffgehalts im Abgas der Vorrichtung in Datenverbindung stehen. In Abhängigkeit von den an den Sensoren erfassten Messparametern ist es so möglich, die Volumenströme von zweitem Brennstoff und Sauerstoff nach einem vorgegebenen Programm zu regeln.

Anhand der Zeichnung soll im Folgenden ein Ausführungsbeispiel der Erfindung näher erläutert werden. In schematischen Ansichten zeigen:
- Fig. 1:: Eine erfindungsgemäße Vorrichtung zur in-situ-Nachverbrennung von Schadstoffen in einer Ofenanlage,
- Fig. 2a:: die in der Anlage aus Fig. 1 eingesetzte Sauerstofflanze in einer vergrößerten Ansicht im Längsschnitt und
- Fig. 2b:: die Sauerstofflanze aus Fig. 2a in einer Vorderansicht.

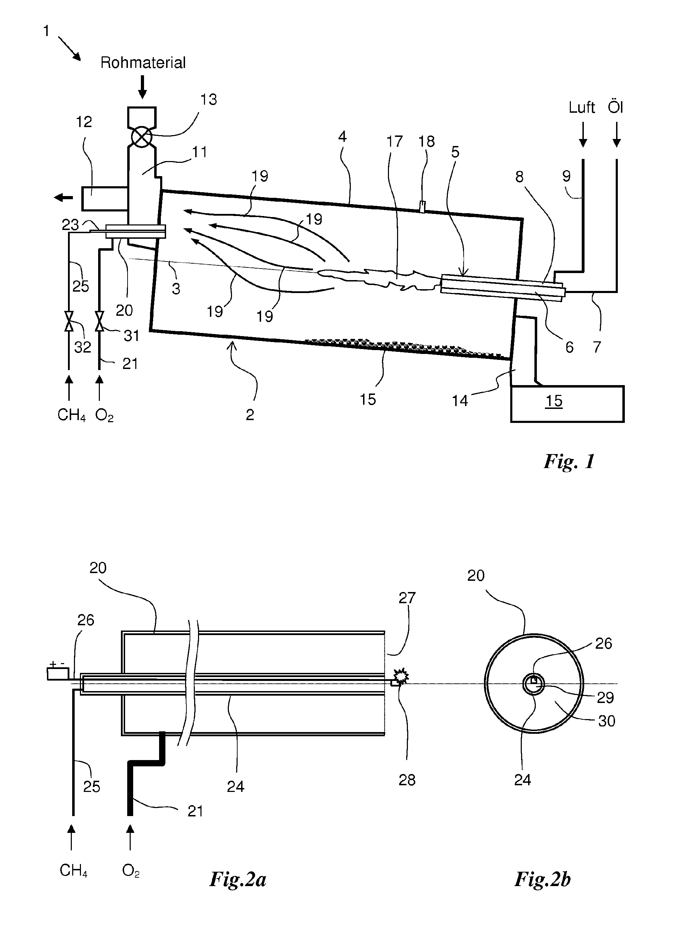

Die in Fig. 1 dargestellte Ofenanlage 1 umfasst im Ausführungsbeispiel einen Drehrohrofen 2 mit einem um eine Achse 3 drehbar gelagerten und hier in einer aufgeschnittenen Darstellung gezeigten Ofenraum 4, der von einem Brenner, im Folgenden "Hauptbrenner" 5 genannt, befeuert wird. Anstelle eines Drehrohrofens kann im Übrigen jedoch auch eine andere Einrichtung zur Wärmeerzeugung zum Einsatz kommen, beispielsweise ein Kammerofen oder ein Reaktor. Der Hauptbrenner 5 umfasst eine zentrale Brennstoffzuführung 6, die über eine Brennstoffzuleitung 7 an einer hier nicht gezeigten Quelle für gasförmigen, flüssigen oder festen Brennstoff, beispielsweise Erdgas, Öl oder Kohlestaub (im Folgenden "erster Brennstoff" genannt), angeschlossen ist. Koaxial zur Brennstoffzuführung 6 ist am Hauptbrenner 5 eine Zuführung 8 für ein Oxidationsmittel, beispielsweise Sauerstoff oder Luft, angeordnet, die mit einer Zuleitung 9 für das Oxidationsmittel strömungsverbunden ist. Auf der vom Hauptbrenner 5 entgegengesetzten Stirnseite des Ofenraums 4 ist eine Aufgabeeinheit 11 angeordnet, über die beim Betrieb der Ofenanlage 1 sowohl Rohmaterial in den Ofenraum 4 aufgegeben als auch Abgas über eine Abgasleitung 11 aus dem Ofenraum 4 abgeführt wird. Eine Schleuse 13 stellt eine Verbindung der Aufgabeeinheit 11 mit hier nicht gezeigten Einrichtungen zur Aufbereitung des aufzugebenden Rohstoffs her, beispielsweise Einrichtungen zum Mahlen, Trocken, Mischen, Granulieren oder Klassieren des Rohstoffs. Auf der Stirnsite des Ofenraums 4, in der der Hauptbrenner 5 angeordnet ist, ist eine Entnahmeeinrichtung 14 angeordnet, über die Rohmaterial 15, das im Ofenraum 4 einer thermischen Behandlung unterzogen wurde, abgeführt und einem Zwischenspeicher 16 oder einer weiteren Verarbeitungseinheit, beispielsweise einem Brennofen oder einer Kühleinrichtung, zugeführt wird.

Im Betrieb der Vorrichtung 1 wird der zu behandelnde, vorzugsweise rieselfähige, Rohstoff 15, beispielsweise Blähton, über die Aufgabeeinheit 11 dem Ofenraum 4 zugeführt und dort bei einer Temperatur der Ofenatmosphäre von beispielsweise 500°C bis 750°C einer thermischen Behandlung unterzogen. Dazu wird der erste Brennstoff über die Brennstoffzuleitung 7 und die Brennstoffzuführung 6 des Hauptbrenners 5 sowie Oxidationsmittel über die Zuleitung 9 und die Zuführung 8 des Hauptbrenners 5 in den Ofenraum 4 eingebracht und gezündet, woraufhin der erste Brennstoff unter Ausbildung einer Flamme 17 verbrennt. Die Flamme 17 wird mittels einer üblichen Flammüberwachung, beispielsweise mittels einer UV-Sonde 18, überwacht. Die bei der thermischen Behandlung entstehenden Abgase, also Brenngase ebenso wie bei der thermischen Behandlung des Rohstoffs entstehende gasförmige Reaktionsprodukte, werden, wie durch die Pfeile 19 angedeutet, über die Aufgabeeinheit 11 und die Abgasleitung 12 abgeführt.

Infolge einer nicht vollständigen Verbrennung des ersten Brennstoffs oder aufgrund der im Rohmaterial ablaufenden chemischen Reaktionen können die Abgase der Verbrennung noch in erheblichem Umfang Schadstoffe enthalten, insbesondere Kohlenmonoxid und/oder Kohlenwasserstoffe, darunter insbesondere Ethyl-, Ethylen, Methylgruppen oder Benzol, oder geruchsbelästigende Stoffe wie beispielsweise Schwefelwasserstoffe. Bei der in Fig. 1 gezeigten erfindungsgemäßen Vorrichtung wird daher das Abgas einer in-situ Nachverbrennung im Ofenraum 4 unterzogen. Dazu ist auf der dem Hauptbrenner 5 entgegengesetzten Stirnseite des Ofenraums 4, im Bereich der Aufgabeeinheit 11, eine Sauerstofflanze 20 angeordnet. Die Sauerstofflanze 20 ist mit einer Sauerstoffleitung 21 strömungsverbunden, die mit einer hier nicht gezeigten Sauerstoffquelle, insbesondere ein Tank oder eine Sauerstoffleitung, strömungsverbunden ist. Innerhalb der Sauerstofflanze ist ein Brenner, im Folgenden "zweiter Brenner" 23 genannt, angeordnet. Sauerstofflanze 20 und zweiter Brenner 23 sind in Fig. 2a und Fig. 2b vergrößert dargestellt.

Der zweite Brenner 23 umfasst einen Brennstoffkanal 24, der koaxial innerhalb der Sauerstofflanze 20 aufgenommen ist und über eine Brennstoffzuleitung 25 mit einer hier nicht gezeigten Quelle für einen zweiten Brennstoff, beispielsweise Erdgas, Propan oder LPG strömungsverbunden ist. Durch den Brennstoffkanal 24 hindurch erstreckt sich eine beispielsweise elektrische Zündvorrichtung 26, mittels der vor der Mündungsöffnung 27 der Sauerstofflanze 20 ein Funken 28 erzeugt werden kann.

Beim Betrieb der Sauerstofflanze 20 und des Brenners 23 wird Sauerstoff mit einer Reinheit von beispielsweise 95 Vol.-% durch die Sauerstofflanze 20 in den Ofenraum 4 eingetragen. Zugleich wird ein zweiter Brennstoff durch den Brennstoffkanal 24 zugeführt. Die Querschnittsfläche 29 des Brennstoffkanals 24 ist dabei klein gegenüber dem freien Querschnitt 30 der Sauerstofflanze 20 (Innenquerschnitt der Sauerstofflanze 20 abzüglich des Außenquerschnitts des Brennstoffkanals 24) und beträgt beispielsweise nur 1/10 bis 1/25 von diesem. Entsprechend ist der Volumenstrom des Brennstoffs, bei gleicher Austrittsgeschwindigkeit, klein gegenüber dem des Sauerstoffs. Nach Zündung mittels der Zündvorrichtung 26 verbrennt der durch den Brennstoffkanal 24 eingeleitete Brennstoff mit einem kleinen Teil (beispielsweise 10% bis 20%) des durch die Sauerstofflanze 20 zugeführten Sauerstoffs.

Durch die Verbrennung des Brennstoffs am Brenner 23 wird der über die Sauerstofflanze 20 eingetragene Sauerstoff auf eine Temperatur erhitzt, die der Temperatur in der Atmosphäre des Ofenraums 4 entspricht oder diese noch übersteigt. Die Zuführung des erhitzten Sauerstoffs aus der Sauerstofflanze 20, verbunden mit den Brenngasen des Brenners 23, führen zu einer verstärkten Bildung von Radikalen im Bereich vor der Ausmündung 27 der Sauerstofflanze 20. Die Anwesenheit der Radikale begünstigt die Nachverbrennung von im Abgas des Ofenraums vorhandenen Schadstoffen, insbesondere von Kohlenwasserstoffverbindungen und Kohlenmonoxid. Durch Stellventile 31, 32 kann der Volumenstrom von dem Ofenraum 4 zugeführtem Brennstoff bzw. Sauerstoff eingestellt werden. Die Stellventile 31, 32 stehen beispielsweise mit einer hier nicht gezeigten Steuereinheit in Datenverbindung, die die Volumenströme von Brennstoff und Sauerstoff nach vorgegebenen Daten oder in Abhängigkeit von Parametern einstellt, die mittels hier gleichfalls nicht gezeigter Sensoren im Ofenraum 4 und/oder in der Abgasleitung 12 gemessenen werden, wie beispielsweise der Temperatur im Ofenraum 6 oder der Schadstoffkonzentration im Abgas.

Anstelle der in den Zeichnungen gezeigten Anordnung von Sauerstofflanze 20 und Brenner 23 nach Art eines Impulsbrenners ist es im Rahmen der Erfindung ebenfalls vorstellbar, einen Brenner mit einer Vorverbrennungskammer mit anschließendem Verteiler bzw. Dralleinrichtung auszurüsten, um den über die Sauerstofflanze 20 zugeführten Sauerstoffstrom zu erhitzen.

Das erfindungsgemäße Verfahren sowie die erfindungsgemäße Vorrichtung eignen sich zum Einsatz in einer Vielzahl von Anwendungen, beispielsweise bei der Herstellung von Blähton, Zement, Blei, Aluminium, Stahl oder bei

Verbrennungsvorgängen im Bereich Chemie oder der Abfallbeseitigung.

### Bezugszeichenliste

- 1: Ofenanlage
- 2: Drehrohrofen
- 3: Achse
- 4: Ofenraum
- 5: Hauptbrenner
- 6: Brennstoffzuführung
- 7: Brennstoffzuleitung
- 8: Zuführung für Oxidationsmittel
- 9: Zuleitung für Oxidationsmittel
- 10: -
- 11: Aufgabeeinheit
- 12: Abgasleitung
- 13: Schleuse
- 14: Entnahmeeinrichtung
- 15: Rohmaterial
- 16: Zwischenspeicher
- 17: Flamme
- 18: UV-Sensor
- 19: Pfeil
- 20: Sauerstofflanze
- 21: Sauerstoffleitung
- 22: -
- 23: Brenner
- 24: Brennstoffkanal
- 25: Brennstoffzuleitung
- 26: Zündvorrichtung
- 27: Mündungsöffnung
- 28: Funken
- 29: Innenquerschnittsfläche
- 30: Freie Querschnittsfläche
- 31: Stellventil
- 32: Stellventil

## Patentansprüche

1. Verfahren zur in-situ Nachverbrennung von bei einem Verbrennungsvorgang erzeugten Schadstoffen, bei dem an einem dem Ofenraum (4) zugeordneten Hauptbrenner (5) ein erster Brennstoff mit einem ersten Oxidationsmittel verbrannt wird und bei dem zur in-situ Nachverbrennung von Schadstoffen zusätzlich Radikale im Ofenraum (4) erzeugt werden,
**dadurch gekennzeichnet,**
**dass** zur Erzeugung der Radikale dem Ofenraum (4) mittels einer Sauerstofflanze (20) überstöchimetrischer Sauerstoff zugeführt wird, der durch Verbrennen eines zweiten Brennstoffs mittels eines zweiten Brenners (23) beheizt wird.

2. Verfahren nach Anspruch 1, **dadurch gekennzeichnet, dass** das Volumenstromverhältnis des dem Ofenraum (4) über Sauerstofflanze (20) zugeführtem Sauerstoff und über dem zweiten Brenner (23) zugeführten zweiten Brennstoff mindestens 10:1, bevorzugt mindestens 20:1 beträgt.

3. Verfahren nach Anspruch 1 oder 2, **dadurch gekennzeichnet, dass** in der Atmosphäre des Ofenraums (4) infolge der Verbrennung des ersten Brennstoffs mit dem ersten Oxidationsmittel eine Temperatur von 600°C bis 750°C herrscht.

4. Verfahren nach einem der vorhergehenden Ansprüche, **dadurch gekennzeichnet, dass** der über die Sauerstofflanze (20) zugeführte Sauerstoffstrom auf eine Temperatur aufgeheizt wird, die gleich oder höher ist also die Temperatur des Abgases aus dem Ofenraum (4).

5. Verfahren nach einem der vorhergehenden Ansprüche, dass als zweiter Brennstoff im Brenner (23) ein gasförmiger Brennstoff zum Einsatz kommt.

6. Vorrichtung zur in-situ Nachverbrennung von Schadstoffen in einem Ofenraum (4), der einen mit einer Zuleitung (6, 7) für einen ersten Brennstoff und einer Zuleitung (8, 9) für ein erstes Oxidationsmittel ausgerüsteten Hauptbrenner (5) sowie Mittel (20, 23) zur zusätzlichen Erzeugung von Radikalen im Ofenraum (5) aufweist,
**dadurch gekennzeichnet,**
**dass** die Mittel (20, 23) zur zusätzlichen Erzeugung von Radikalen eine mit einer Quelle für Sauerstoff strömungsverbundene Sauerstofflanze (20) und einen mit einer Brennstoffzuleitung (24, 25) zur Zuführung eines zweiten Brennstoffs ausgerüsteten zweiten Brenner (23) zur Aufheizung des über die Sauerstofflanze (20) zugeführten Sauerstoffstroms umfassen.

7. Vorrichtung nach Anspruch 6, **dadurch gekennzeichnet, dass** der zweite Brenner (23) mit einem Brennstoffkanal (24) ausgerüstet ist, der innerhalb der Sauerstofflanze (20) angeordnet ist

8. Vorrichtung nach Anspruch 6 oder 7, **dadurch gekennzeichnet, dass** der zweite Brenner (23) eine Vorverbrennungskammer mit angeschlossener Verteilungs- und/oder Dralleinrichtung umfasst.

9. Vorrichtung nach einem der Ansprüche 6 bis 8, **dadurch gekennzeichnet, dass** die freien Querschnittsflächen von Sauerstofflanze (20) und Brennstoffkanal (24) des zweiten Brenners (23) ein Verhältnis von mindestens 10:1, bevorzugt mindestens 20:1 aufweisen.

10. Vorrichtung nach einem der Ansprüche 6 bis 9, **dadurch gekennzeichnet, dass** die Sauerstofflanze (20) in einen dem Ofenraum (4) entweichenden Abgasstrom gerichtet ist.

11. Vorrichtung nach einem der Ansprüche 6 bis 10, **dadurch gekennzeichnet, dass** die Volumenströme von Sauerstofflanze (20) und/oder zweitem Brenner (23) mittels Stellventilen (31, 32) variierbar sind und mit einer Steuereinheit sowie mit Sensoren zur Temperaturüberwachung im Ofenraum (4) und/oder zur Überwachung des Schadstoffgehalts im Abgas der Vorrichtung (1) in Datenverbindung stehen.
